(19) **Europäisches Patentamt / European Patent Office / Office européen des brevets**

(11) **EP 4 683 390 A1**

(12) # EUROPEAN PATENT APPLICATION

(43) Date of publication:
**21.01.2026 Bulletin 2026/04**

(21) Application number: **25179498.8**

(22) Date of filing: **28.05.2025**

(51) International Patent Classification (IPC):
**H04W 40/06** (2009.01)   **H04W 40/12** (2009.01)
**H04W 40/22** (2009.01)   **H04W 40/24** (2009.01)

(52) Cooperative Patent Classification (CPC):
**H04W 40/12; H04W 40/06; H04W 40/22;
H04W 40/246**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.07.2024 GB 202410292**

(71) Applicant: **Airspan IP Holdco LLC
Boca Raton, FL 33431 (US)**

(72) Inventor: **LOGOTHETIS, Andrew
High Wycombe, HP10 8DN (GB)**

(74) Representative: **D Young & Co LLP
3 Noble Street
London EC2V 7BQ (GB)**

(54) **MULTI HOP ROUTING USING MULTIPLE FREQUENCY RANGES**

(57)    A control node includes receive circuitry that receives topology data regarding a network that features a plurality of nodes connected by links. At least some of the links are wireless links of a first frequency range and at least some of the links are of a second frequency range. Calculation circuitry calculates at least one multi-node path from a given source node in the nodes to a given destination node in the nodes. The first frequency range and the second frequency range are non-overlapping.

FIG. 1

**Description**

The present technique relates to routing in a network.

It is desirable for a wireless network to be able to have good penetration (e.g. being able to transmit signals at good range through a building for instance) and also good bandwidth. However, typically, better bandwidth is achieved using higher frequency signals that have poorer penetration.

Viewed from a first example configuration, there is provided a control node comprising: receive circuitry configured to receive topology data regarding a network comprising a plurality of nodes connected by links, wherein at least some of the links are wireless links of a first frequency range and at least some of the links are of a second frequency range; and calculation circuitry configured to calculate at least one multi-node path from a given source node in the nodes to a given destination node in the nodes, wherein the first frequency range and the second frequency range are non-overlapping.

Viewed from a second example configuration, there is provided a method comprising: receiving topology data regarding a network comprising a plurality of nodes connected by links, wherein at least some of the links are wireless links of a first frequency range and at least some of the links are of a second frequency range; and calculating at least one multi-node path from a given source node in the nodes to a given destination node in the nodes, wherein the first frequency range and the second frequency range are non-overlapping.

Viewed from a third example configuration, there is provided a node comprising: scan circuitry configured to determine topology data by attempting to communicate to each node in a set of neighbouring nodes using a first frequency in a first frequency range and a second frequency in a second frequency range; transmission circuitry configured to transmit the topology data to a control node; receive circuitry configured to receive a routing table to route data to a given destination node from the control node; communication circuitry configured to route incoming data according to the routing table; and optimisation circuitry configured to optimise communication within the set of neighbouring nodes.

Viewed from a fourth example configuration, there is provided a method comprising: determining topology data by attempting to communicate to each node in a set of neighbouring nodes using a first frequency in a first frequency range and a second frequency in a second frequency range; transmission circuitry configured to transmit the topology data to a control node; receiving a routing table to route data to a given destination node from the control node; routing incoming data according to the routing table; and optimising communication within the set of neighbouring nodes.

The present technique will be described further, by way of example only, with reference to embodiments thereof as illustrated in the accompanying drawings, in which:

Figure 1 illustrates a system 2 that includes a node and a control node in accordance with some examples;

Figure 2 illustrates an example of a network, in which links between nodes make use of a first frequency range (sub-6 GHz) and a second frequency range (mmWave);

Figure 3A shows an example of the network topology that may be acquired by a control node in order to determine routes between a given source (Src) and particular destinations $X_1$, $X_2$;

Figure 3B shows an example of a routing table that might be developed for such a network;

Figure 3C shows an example of a routing table that might be developed for such a network;

Figure 4 shows an example of a future rewards record and a wireless parameters table;

Figure 5 shows an example of Quality of Service definitions;

Figure 6A shows an example equation for deriving a link value from multiple network parameters;

Figure 6B shows a further example equation for deriving a link value from multiple network parameters;

Figure 7 shows an example of using reinforcement learning to form a route in accordance with some examples; and

Figures 8A and 8B show example methods in accordance with some examples.

Before discussing the embodiments with reference to the accompanying figures, the following description of embodiments and associated advantages is provided.

In accordance with one example configuration there is provided a control node comprising: receive circuitry configured to receive topology data regarding a network comprising a plurality of nodes connected by links, wherein at least some of the links are wireless links of a first frequency range and at least some of the links are of a second frequency range; and calculation circuitry configured to calculate at least one multi-node path from a given source node in the nodes to a given destination node in the nodes, wherein the first frequency range and the second frequency range are non-overlapping.

In wireless communication, different frequency ranges have different characteristics. For example:

• Lower frequency ranges: Designated as Frequency Range 1 (FR1)

   ○ Broader Coverage: Lower frequencies are capable of covering larger geographical areas This is mostly because (at least in line-of-site conditions) the path loss increases logarithmically in frequency.

◦ Better Penetration: Signals of lower frequency have enhanced penetration abilities through barriers like walls, buildings, and other structures. This makes these frequencies perfect for indoor coverage and maintaining connectivity in urban settings where such obstructions are common.

◦ MIMO (Multiple Input Multiple Output): Lower frequency bands are well-suited for the effective implementation of MIMO technology, which employs multiple antennas at both the transmitter and receiver. This technology boosts data throughput and link reliability by transmitting multiple data streams at the same time, thereby improving spectral efficiency and enhancing the overall capacity of the network.

◦ Diversity Gain: The use of multiple antennas also results in diversity gain, which aids in counteracting the effects of fading and enhances signal quality. Diversity gain ensures that even if one signal path encounters poor conditions, another path can maintain a strong connection, thereby enhancing the reliability and performance of the communication link.

• Higher frequency ranges: Designated as Frequency Range 2 (FR2)

◦ Finer Directional Beams: Advanced antenna technologies like beamforming are often used with higher frequency systems to precisely direct signals where they are needed. This enhances signal quality and reduces interference, improving the overall performance of the network.

◦ Capacity: Due to their larger bandwidth, higher frequencies can accommodate a higher density of devices in a specific area. This is useful in densely populated areas like stadiums, urban centres, and concert venues where numerous devices need to connect simultaneously.

◦ Higher Data Rate: For the same reason as above, i.e. larger bandwidth, higher frequencies are well suited for applications that require rapid data transfer, such as streaming high-definition videos, virtual reality, and downloading large files.

By forming a multi-hop route that supports reception on one/both frequency bands and supports transmission on one/both frequency bands it is possible to improve spectrum utilization while maintaining reliable connections, facilitating smooth transitions between different frequency bands based on network conditions and user requirements. The control node acts as a device that forms the routes for other nodes within the network. It therefore receives information regarding the topology of the network. Such a network can be connected as a series of neighbours that each node can communicate with. Links may be identified as being from one of the frequency ranges. Routes can then be performed from a given source node (e.g. an origin node) to a destination node using the information. In practice, the route is selected in order to take advantage of the qualities of both types of frequency range thereby potentially gaining higher bandwidth and also extended range. The routes can then be distributed to the nodes. For instance, the given source node may be given routing tables that indicate how data should be transmitted to a particular destination. This routing information can either be transmitted across an initial 'bootstrapped' network that enables communication between the nodes and the control node, or it can be sent across a backup network that is provided for configuration, or such information can be determined ahead of time (e.g. in a pre-planned network) and loaded on to the nodes. Other techniques may also be known to the skilled person. The frequency ranges need not be contiguous ranges. For instance, the first range might be 2.42 - 2.46 GHz and 2.49 GHz, while the second range may be 6GHz - 6.5 GHz and 6.8 - 6.9 GHz. The lack of overlap between the frequency ranges means that the frequency ranges have distinct characteristics.

In some examples, the topology data comprises, for each node of the plurality of nodes, a set of wireless parameters for neighbours of that node, for each of the first frequency range and the second frequency range. The wireless parameters could include, for instance, an indication of the link's bandwidth, an error rate of the link, a latency of the link, and so on. Of course, other parameters are also possible. Obviously the parameters that are selected should be appropriate in order to express the differences in the frequency ranges so that the multiple frequency ranges can be made use of. Furthermore, if quality of service is considered, then the metrics should correspond with those being used to establish quality of service so that appropriate routes can be selected.

In some examples, an end of the first frequency range is below 6 GHz; and a start of the second frequency range is at least 6 GHz. The second frequency range is sometimes referred to as mmWave (millimetre wave) and is capable of higher throughput as compared to lower frequency ranges (e.g. 2.4 GHz). However, it also suffers from having limited range and limited ability to permeate certain structures (e.g. concrete, steel, wood, glass, and so on, which are typically used in buildings). By forming routes that make use of both technologies, it may be possible to gain the advantages of improves signal stability using 2.4 GHz links while gaining the improved bandwidth of for example 2.4 GHz links. In practice, precisely which frequencies are available may be limited by local regulations/laws.

In some examples, the calculation circuitry is configured to calculate the at least one multi-node path from the given source node to the given destination based on a cost function. A cost function is an expression or equation that indicates a notional cost (or alternatively a value) of a link or route/path. Weights are attached to different parameters that affect the cost/value. So for example, bandwidth might have a higher effect than latency on the cost/value of a particular link. Having established a cost/value of a link, various techniques can be used in order to maximise the value (or minimise a cost) over a series of links and thereby attempt to determine the 'best' route between two nodes.

In some examples, the calculation circuitry is configured to calculate the at least one multi-node path from the given source node to the given destination node using machine learning. Machine learning algorithms are a set of algorithms in which data can be used to generate one or more inferences in order to arrive at a solution.

In some examples, the calculation circuitry is configured to calculate the at least one multi-node path from the given source node to the given destination node based on a Quality of Service requirement for the source node. The term 'Quality of Service' (QoS) can be used to refer to the overall experience or performance of a service. It encapsulates a number of different metrics that are simultaneously required for that service to be provided. For instance, video communication requires not only a particular bandwidth to operate well, but also a given packet latency. Computer games might require a lower bandwidth but also a lower packet latency, while file transfers might require a high bandwidth but be able to make do with a higher latency. These, and other parameter such as packet errors, collectively express a required QoS. The QoS for a particular user/device/client can be expressed for the service or services required by that device.

In some examples, the quality of service requirement comprises one or more factors including: a throughput; a packet delay; and an error rate.

In some examples, each of the one or more factors is weighted in importance to produce the at least one multi-node path. In different circumstances, different routes might be more or less appropriate. For instance, a route that prioritises bandwidth may be appropriate where a file transfer is to take place whereas a route that prioritises priority might be appropriate where live communication is taking place. The routes to be used for different nodes could therefore differ over time according to the changing quality of service requirements.

In some examples, the multi-node path can be any one of: an entire frequency range 1 path, an entire frequency range 2 path, and a mixed frequency range path. The control node is capable of producing each type of route, depending on what is desired. An entire frequency range 1 path is a route in which each link uses frequency range 1 to send communications, an entire frequency range 2 path is a route in which each link uses frequency range 2 to send communications, and a mixed frequency range path is a route in which there is at least one link that uses frequency range 1 and at least one link that uses frequency range 2 between the source (e.g. origin) and the destination of the route.

In some examples, the calculation circuitry configured to calculate plurality of multi-node paths including the multi-node path from sources including the given source to destinations including the given destination. Different routes can therefore be provided for different source nodes within the network. The needs of the different source nodes may therefore have to be balanced in order to produce suitable routes.

In accordance with some examples, there is provided a node comprising: scan circuitry configured to determine topology data by attempting to communicate to each node in a set of neighbouring nodes using a first frequency in a first frequency range and a second frequency in a second frequency range; transmission circuitry configured to transmit the topology data to a control node; receive circuitry configured to receive a routing table to route data to a given destination node from the control node; communication circuitry configured to route incoming data according to the routing table; and optimisation circuitry configured to optimise communication within the set of neighbouring nodes.

Up until now, the discussion has focussed primarily on the control node that determines the routes. However, the node itself may also be a part of this process. Scan circuitry determines a plurality of wireless parameters when attempting to communicate with each neighbouring node. The list of neighbouring nodes can be pre-known or can be determined through beaconing/sounding. Regardless, for each such neighbour node that is to be considered for a link in a route, a connection is made using a first frequency range. The process is then repeated using the second frequency range. In each case, wireless parameters may be collected. This could be as simple as whether a link belongs to one frequency range or another or could be more complicated such as giving information about bandwidth and/or latency. Note that the set of neighbours for the two frequency ranges might be the same, have some overlap, or be entirely different. In any case, the end result is a list of nodes (and any corresponding wireless parameters) that can act as neighbours using a first frequency range and a list of nodes (and any corresponding wireless parameters) that can act as neighbours using a second frequency range. This information is then transmitted to the previously described control node. In due course, after transmitting the information to the control node, the node will receive a routing table from the control node. The routing table indicates how data should be routed to a particular destination, that is, the route that should be taken. The communication circuitry uses the routing table to actually perform the routing. In addition to this, optimisation circuitry is provided. The optimisation circuitry optimises communications within the set of neighbouring nodes. This optimisation could (i) take place prior to the scan circuitry performing its scanning - e.g. in order to improve each link prior to being considered for routing by the control node, and/or (ii) improve communications with nodes that are indicated to be used for routing by the routing table. There are a number of ways in which the transmission circuitry can get the topology data.

In some examples, the routing table is configured to indicate, for the given destination node, a next hop from among the neighbouring nodes. For instance, a routing table might indicate that for data to reach a particular destination X, neighbouring node D (rather than neighbouring node E) should be used. This would be the case, for instance, if D had a route to X and E did not have a route to X.

In some examples, the routing table is configured to provide a plurality of routes for data to a plurality of destination nodes including the given destination node, from the node; and the routing table indicates, for each of the plurality of destination nodes, a next hop from among the neighbouring nodes. The routing table may therefore indicate different next hops for different destinations. Extending the above example, the same routing table might indicate that for data to reach a particular destination Y, neighbouring node E (rather than D) should be used. Again, this may be the case if E has a route to Y and D does not.

In some examples, the optimisation circuitry is configured to optimise links to those of the neighbouring nodes that are identified as being next hops according to the routing table. Thus, connections to the next hops indicated by the control node are made as robust as possible, while keeping the bandwidth high.

In some examples, the topology data comprises wireless parameters including one or more of the following: a bandwidth, a latency, and an error rate.

Particular embodiments will now be described with reference to the figures.

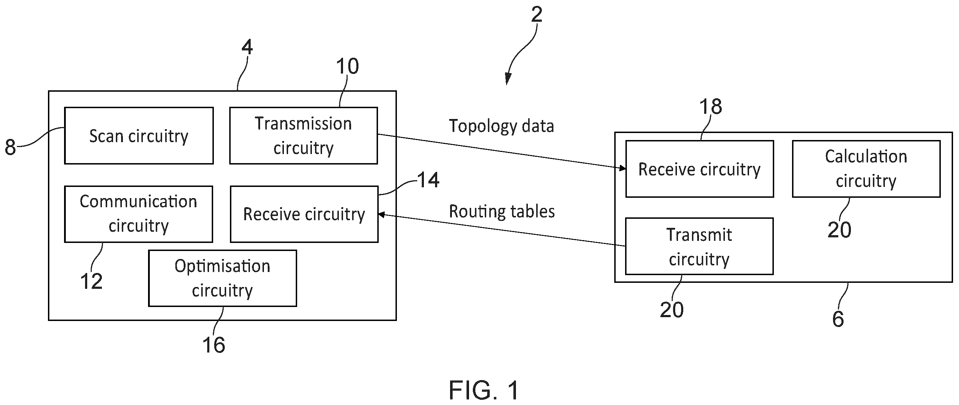

Figure 1 illustrates a system 2 that includes a node 4 and a control node 6. The node 4 may be one of several nodes in the network, the nodes being connected by links of a first frequency range and/or a second frequency range. A route can thereby be determined between a node (known in this context as a source) and its destination, in which a transmission can be made across a series of nodes (hops).

Such routes are calculated by the control node 6. In particular, scan circuitry 8 on the node 4 can determine the local environment of the node 4. That is, in particular, which neighbouring nodes can be communicated with using the transmission circuitry 10 and the receive circuitry 14. There are a number of ways this can be achieved using sounding/beaconing in which each node transmits a 'hello' message, and any nodes that receive the 'hello' know that they can receive from that node. The process can be repeated for each of the multiple frequency ranges are available, and by combining this data across multiple nodes can be used to determine a topology map for the entire network. The local topology data (e.g. collected by the specific node 4) can be provided to the control node 6 via transmission circuitry 10 on the node 4 and received by receive circuitry 18 on the control node 6. There are a number of ways in which this data can be transmitted. For instance, an additional communications channel (e.g. a physical wire) may be provided - possibly temporarily while the node 4 becomes established. In some cases, the data can be selected and provided manually by an engineer for instance. In some examples, a partial network already exists, in which the neighbouring nodes detected by the node 4 are already connected to the control node 6. In this way, the transmission circuitry 10 can already use the existing partial network in order to transmit the gathered local topology data to the control node. The exact method used to transmit the topology data to the control node is, ultimately, irrelevant to the present techniques.

Once the topology data has been collected by the control node 6, the calculation circuitry 20 uses the topology data to determine a route to use by the node 4 to transmit within the network. The route may be formed using links of the first frequency range, links of the second frequency range, or a mixture of links using the first and second frequency ranges. Having determined the routes, these are provided to the node 4 in the form of routing tables. Again, the exact method used to provide the routing tables to the node 4 is immaterial and can use the same techniques mentioned above - e.g. a partial existing network.

The process used to determine the routes will be described in more detail in the following description.

Having received the routing tables at the node 4, communication circuitry 12 can use the routing tables to participate in the network by the transmitting and receiving of data to one or more destinations for which routes have been established.

A further point that has not yet been discussed in the optimisation circuitry 16. There are a number of ways in which the optimisation circuitry 16 can be used. In some embodiments, having received the routing tables, the optimisation circuitry 16 reinforces links to neighbouring nodes that are used as 'next hops' to reach particular destinations. For instance, the communication circuitry may include a MIMO antenna array in which techniques such as beamforming can be used to provide a better or more reliable communication link to the next hop. In other embodiments, the optimisation circuitry 16 can be used to perform such optimisation with each neighbouring node ahead of the scan process performed by the scan circuitry 8 so that the links considered by the calculation circuitry 20 are the best quality links that are available to the node 4. This makes it possible to perform better determinations of routes by taking into account the best configurations of links that might be achieved. Both of these techniques can, of course, also be used. AI or machine learning techniques can be used in this optimisation, or of course simpler techniques such as trial-and-error can be used to, e.g. refine the shape of the beam to a given neighbouring node indicated by the routing table.

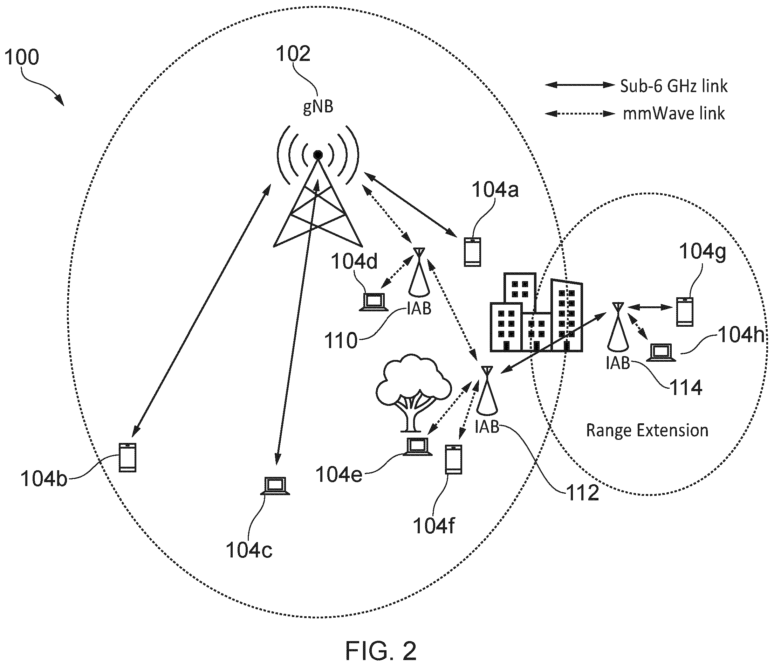

Figure 2 illustrates an example of a network 100, in which links between nodes make use of a first frequency range (sub-6 GHz) and a second frequency range (mmWave). The control node 102 takes the form of a gNodeB (gNB). Items of user equipment 104a, 104b, 104c can directly connect to the gNodeB. In addition, Integrated Access and Backhaul stations (IABs) 110 can also connect to the gNodeB 102 as well as to other IABs 112, 114. These devices are so-called because they not only connect to and provide a backhaul, but they also provide access to other IABs 112, 114 and to other items of user equipment 104d, 104e, 104f, 104g, 104h.

Within the network, a mmWave link may be preferred owing to its high bandwidth potential. However, by providing a sub-6 GHz link, it is possible to extend the range of the overall network so that other IABs 114 and other items of user equipment 104g, 104h can be reached. Thus, a route from a particular item of user equipment 104g may make use of links that are both mmWave and sub-6 GHz when attempting to communicate with another item of user equipment 104d or with the gNodeB 102 (e.g. to access other networks).

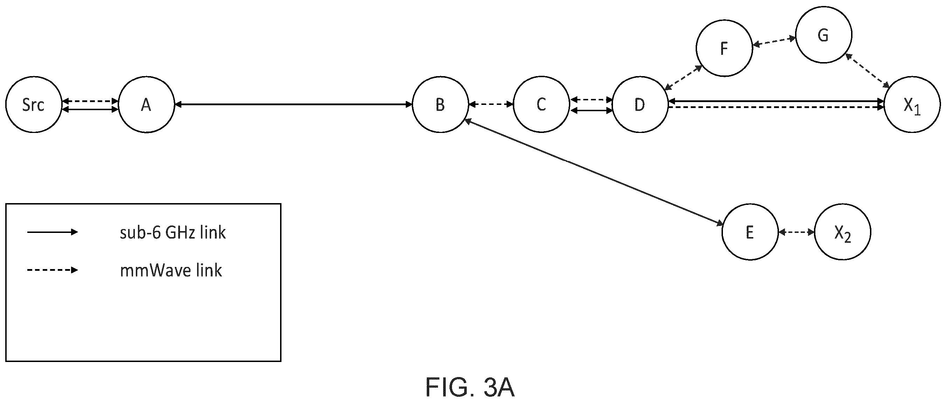

Figure 3A shows an example of the network topology that may be acquired by a control node 6 in order to determine routes between a given source (Src) and particular destinations $X_1$, $X_2$. As previously described, the topology can be gathered by individual nodes and sent to the control node 6 by using sounding/beaconing (e.g. listening for beacons sent out by other nodes to determine that messages can be received from those nodes). The sounding/beaconing process can be repeated by transmitting beacons on a first frequency range (e.g. sub-6 GHz) and a second frequency range (e.g. mmWave). Consequently, as shown in Figure 3A, a network topology map can be produced in which some links are mmWave links and other links are sub-6 GHz links. Note that there may be multiple links between nodes - that is, there might be a mmWave link and also a sub-6 GHz link. Additionally, a link might not be bidirectional. For instance, a mmWave link might only exist from node D to $X_1$, but not from $X_1$ to D.

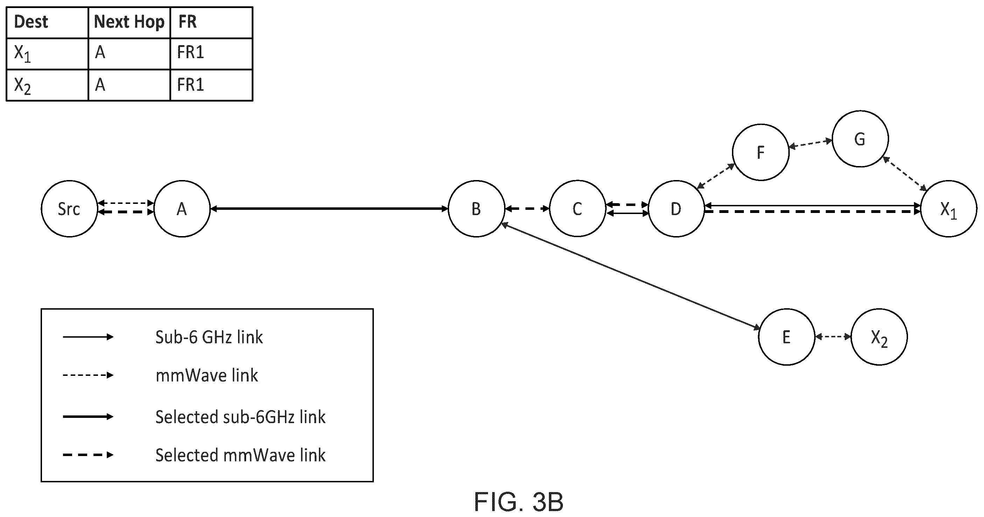

Figure 3B shows an example of a routing table that might be developed for such a network, in this case for the node 'Src'. The table indicates, for each of two destinations ($X_1$ and $X_2$), what the next hop node is (node A in each case), and what frequency range (FR1 or FR2) should be used in order to reach that destination - that is, for instance, whether the link uses mmWave or sub-6 GHz.

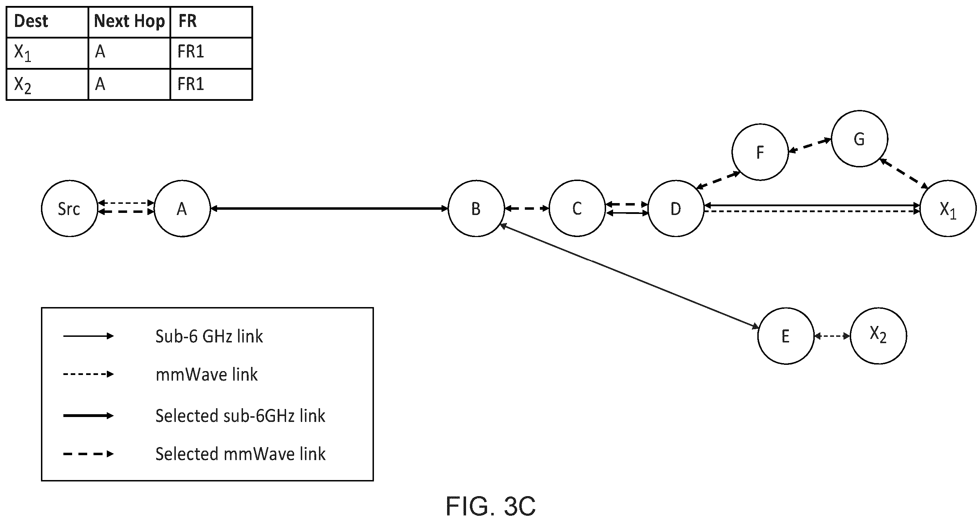

Over time, it is possible that the route may need to change. For instance, if a vehicle is in the way of the beam between two nodes (e.g. D and $X_1$). In these cases, an alternative route might need to be selected - as is shown in Figure 3C where the single hop from D to $X_1$ has been replaced by the path from D to F to G to $X_1$.

In some cases, the selection of route is affected by desired network characteristics. For instance, the source node (Src) might have been involved in file transfers thereby encouraging a route in which bandwidth is maximised. This can be determined, during the sounding/beaconing process by measuring a particular network characteristic and taking this characteristic into account when determining the route. For instance, file transfers might encourage the use of one particular route while a phone call might benefit from a low error rate in which a different route may be selected. As a particular example, a first route making use of a mmWave link may be desirable if a source node is engaging in file transfers. However, a second route making use of a sub-6 GHz link might be desirable if the source is engaged in a VOIP phone call. This is because the sub-6 GHz link may have sufficient bandwidth while also allowing for a route using a smaller number of hops (and therefore a lower latency) than a route using the mmWave link might achieve.

The selection of route by the control node 6 can be determined in a number of ways. In a small enough network, it might be possible to consider all possible simple paths (routes from source to destination in which there is no loop) and a path can be selected using a heuristic (or even randomly). Where particular network characteristics are expressed, it is possible in a small network to calculate which route will meet the desired network characteristics.

For a larger network, this kind of brute force calculation may be intractable. Other techniques can be used such as AI/machine learning. Here, we discuss one particular technique known as reinforcement learning, which is a form of machine learning. The process incorporates steps that seeks generally to increase the speed of learning, and to increase the speed with which the apparatus can adapt to changing conditions in the network. The skilled person will of course appreciate that this particular implementation is merely one possible implementation of one possible technique and that other techniques are of course usable without deviating from the present invention.

In particular, in the described examples, the control node 6 is arranged to employ a reinforcement learning process in order to dynamically select as route from a given source to a given destination. The reinforcement learning process maintains a function Q(s, a) that represents the expected utility (or reward) of selecting the next node (a) for a route from the source (s) (potentially through other intermediate nodes). In the Q-learning paradigm, the function is simply a table in which each entry of the table represents a path from a node s to a node a (potentially through some number of intermediate nodes) and the associated utility Q(s, a) of that path. The calculation of the estimated reward will be discussed in more detail below, but is generally selected to correspond with some performance metric, e.g. based on a characteristic of the network such as a wireless characteristic. For instance, if the performance metric is throughput then a higher throughput from the given source to the given destination may result in a higher reward.

The expected utility can be weighted using a discount factor. For instance, longer paths (or paths that use nodes that are further away from the source node) may be weighted by a discount factor, thereby reducing their expected utility in order to represent the uncertainty associated with the information provided for a long path.

At each iteration of the reinforcement learning algorithm, a selection policy is used to select a route from the future rewards record 400. This may be based on the estimated reward (e.g. when the algorithm is in an 'exploitation mode') but it may select an entry in another manner (e.g. when the algorithm is in an 'exploration mode'). New entries can then be added to the record 400 based on the nodes that are newly reachable using the selected route. For instance, if the route Src->A->B->C was selected and nodes D and E are reachable from node C, then this will result in entries Src->A->B->C->D and Src->A->B->C->E being added to the record 400. The estimated reward of these new routes can be determined using topology data that is been received from the nodes - either previously (with such data being stored in a table) or dynamically when the new route is selected. Note that this process only makes use of nodes that are newly reachable on the route, hence the route Src->A->B->A is not considered even though node A is a neighbour of node B. More specifically, any (partial) route added to the future rewards record must be a simple path (no node appears two or more times). At the same time, any estimated rewards can be updated. For instance, now that the selected route has changed, those routes that were weighted using the discount factor might require changing/updating. The new routes are then added to the record 400 and further iterations are performed.

The process may end in a number of configurable scenarios. Firstly, the process will end if no further entries can be selected from the record 400. In this case, the network has been fully explored and all routes are known in the table. At this point, the best scoring route to a desired destination can be selected from the table. Secondly, the process may end after a number of iterations have been performed. Thirdly, the process may end after a desired destination has been found. Fourthly, the process may end after a number of routes have been discovered. Fifthly, the process may end after a number of routes to a desired destination have been discovered. Other termination criteria are of course possible.

As explained above, the selection policy should balance the needs of exploration with exploitation. Exploration in this instance involves the selection of a route based on criteria other than which route has the highest estimated reward. For instance, the route may be selected randomly, or randomly excluding the route that would be selected during the exploitation mode. It is expected that exploration may yield new partial routes that (in due course) lead to partial routes with a higher estimated reward than is currently available. That is, it may be necessary to select a sub-optimal route and explore along that route in order to reveal routes that are better than the best currently available routes. Fully exploring all possibilities (a brute force search) may be intractable and so exploration needs to be balanced against exploitation where a (partial) route is selected based on its reward. The ratio between exploration and exploitation could be fixed or could be dynamic. Furthermore, the selection between exploration mode and exploitation mode could be random or could proceed in a round robin fashion.

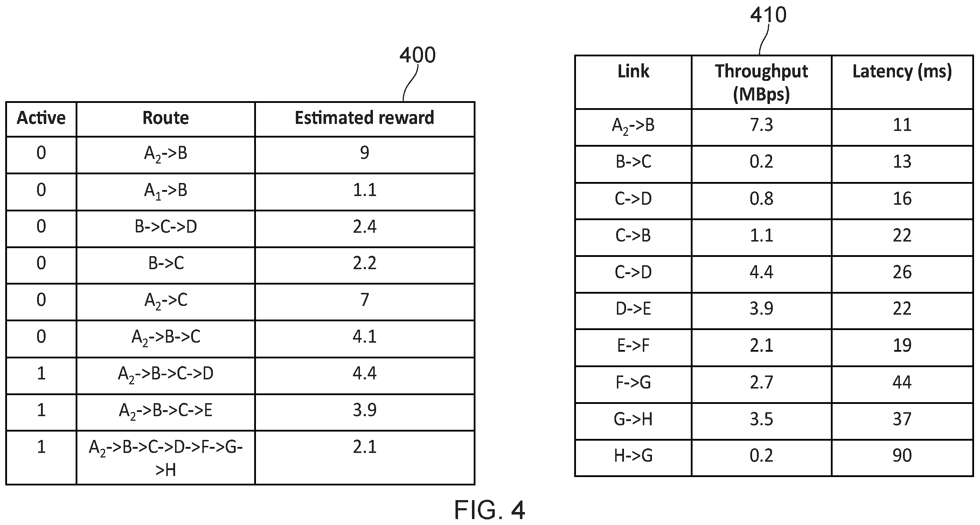

Figure 4 shows an example of a future rewards record 400 and a wireless parameters table 410. The links that are shown here are entirely fictitious and not based on any previous figure. Within this description, a subscript is provided to differentiate between situations where multiple links exist between two nodes. For instance, $A_2$->B represents the link from node A to node B using mmWave (FR2). In contrast, $A_1$->B represents the link from node A to node B using for example 2.4 GHz (sub-6 GHz / FR1). Since the two links have different network characteristics, they each have different estimated rewards. As can be seen here, the reward for FR1 is much lower than the reward for FR2, indicating that the FR2 link is better at providing the desired network characteristics as compared to the FR1 link. Note, however, that depending on how the reward is calculated, it could be that a FR1 link provides a higher reward than a FR2 link.

The wireless parameters table 410 contains the wireless parameters of links in the network topology that are discovered by nodes and passed to the control node 102. This information can be used to build the future rewards table 410.

The future rewards record 400 tracks the estimated rewards for routes. Each entry corresponds with a route from a given node to a given destination. Each route also has an estimated reward. This is based, in this example, on a throughput that will be achieved across the entire route. In this example, some entries are marked as being inactive. This can include routes that have been ruled out as a consequence of their estimated reward dropping below some minimum, routes that cannot form part of an acceptable solution, and routes where further exploration will not yield useful results. This last category includes situations where a particular route is being searched for and all routes that might be derived from a particular entry have already been added to the record. For instance, the route $A_2$->B->C has been made inactive because all of the neighbours of C have been determined and the partial routes resulting therefrom ($A_2$->B->C->D and $A_2$->B->C->E) have been added to the record 400. The selection process disregards inactive candidates.

In this example, in an exploitation mode, the path $A_2$->B->C->D would be selected next, since it has the highest reward among the active entries. In an exploration mode, any of the paths $A_2$->B->C->D, A->B->C->E, or $A_2$->B->C->D->F->G->H could be selected depending on how the exploration mode works. For instance, one of these might be selected randomly.

Note that if/when the topology of the network changes, the same future rewards record 400 can be used to quickly find an alternative routes. In particular, if a certain node becomes unreachable then entries in the record 400 containing that node can be made inactive, thus causing those routes to no longer be selected for either exploration or exploitation. In the case of exploitation, the active entry with the highest estimated reward will be selected. If this route reaches a specified target, then this route could be immediately used. For instance, consider that the route $A_2$->B->C->D->E->F->G->H was the complete route being used and that node D becomes inaccessible. This would cause all entries in the record 400 that contain node D to become inactive, which may result in the selection of the route $A_2$->B->C->E. This may then result in other routes becoming available that are added to the record 400 until a new path to H is determined.

Up until this point, it has been assumed that only a single network characteristic (e.g. throughput) may be considered and that such a characteristic is used to derive the reward. In practice, however, a particular application may have a number of requirements and it may be necessary for each of these to be met in order for the application to run correctly. For instance, video conferencing applications may require a particular bandwidth, latency, and error rate in order to operate correctly. In contrast, file transfers might require a particular bandwidth and error rate (potentially both different to that required for video conferencing) but latency may matter significantly less. Quality of Service is the term used to refer to the overall experience provided for an application or service and may require a number of different minimum characteristics to be achieved.

The calculation of the estimated reward is not necessarily additive. For instance, if the estimated reward corresponds with the throughput then the throughput of a new route A->B->C->D may be the smaller of the throughput of A->B->C and the throughput of C->D and the estimated reward can be calculated accordingly using the smaller of those two values.

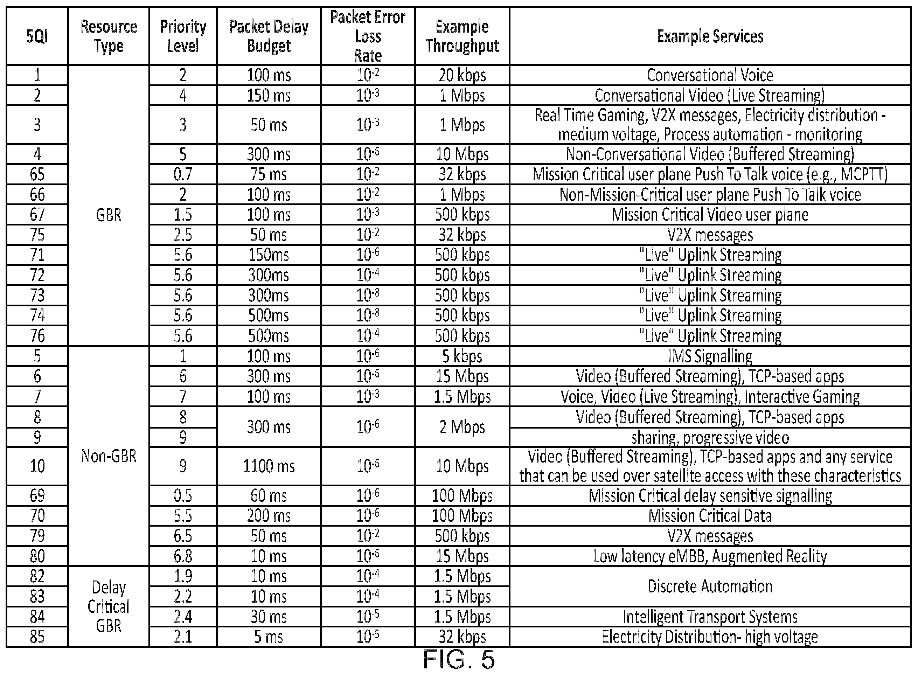

Figure 5 shows an example of the kind of Quality of Service requirements that may be used for different applications in 5G. Of course, other QoS definitions can also be used. The term '5QI' refers to the particular code (id number) for which the collection of requirements belong. The 'resource type' refers to the type of bit rate and whether it is guaranteed, not guaranteed, or delay-critical. The 'priority level' refers to the priority with which packets are treated and the 'packet delay budget' refers to the maximum latency with which packets can be received at their destination. The 'packet error rate' refers to probability with which packets may have an error. The 'default maximum data burst volume' refers to the maximum amount of data that may be provided within a predetermined period.

Figure 5 also shows examples of the application or service that makes use of those requirements and an example throughput. For instance, conversational video is represented by the 5QI code '2'. It has a packet delay budget of 150 ms, and a packet error rate of $10^{-3}$ (i.e. one in every 1000 packets may have an error). An example of the throughput that might be required is 20 kbps. In practice, the throughput may be set for each 5QI identifier by the operator of the network and is not specified by the 5G standard.

When a particular application is in use or desired, a set of weights can be applied to the measured network parameters of a link in order to determine the importance of that link in meeting a QoS requirement needed for a source node. The above mentioned reinforcement learning algorithm can then be used to find a route with a maximum average link importance. This thereby produces routes from sources to destinations in which each link best matches the QoS requirements for the particular application or service that is running/desired.

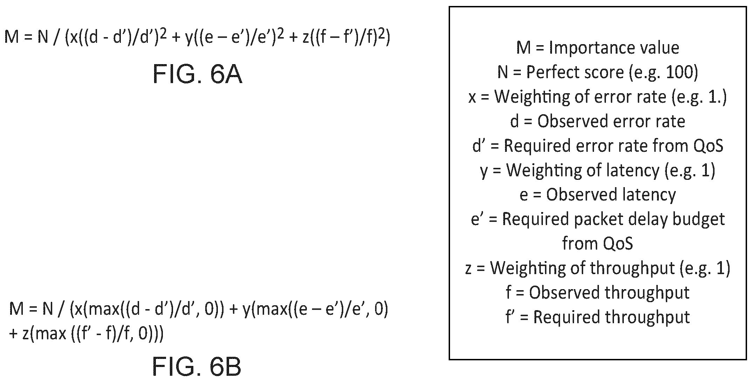

Figure 6A shows an example equation for calculating the importance of a link. The equation considers three different network characteristics - error rate, latency, and throughput. In each case, the requirement from the QoS is subtracted from the measured value, and the result is divided by the QoS requirement. This gives a relative 'error' from the required value. This is then squared (thus eliminating negative values). Each component is then weighted so that certain errors can be emphasised or de-emphasised in importance. For each parameter, a sub-score of 0 represents the ideal value. The sub of these parameters is then subtracted from an ideal perfect score (N).

Consider an example in which the weightings of each parameter are '1'. That is, other than the QoS requirements, no preference is given to improving error rate, throughput, or latency. Also assume that the QoS requirements are 5QI = 3 (real time gaming), which also happens to have a required throughput of 1 Mbit/s. If, for a particular link, the measured packet error rate was $10^{-4}$, the packet delay was 30 ms and the throughput was 0.9 Mbit/s then the resulting calculation would be:

$$M = 100 / (((10^{-4} - 10^{-3})/10^{-3})^2 + ((30 - 50)/50)^2 + ((0.9 - 1)/1)^2)$$

$$M = 100 / ((0.81 + 0.16 + 0.01))$$

$$M = 100 / 0.98$$

$$M = 102$$

Compare this to the situation in which the measured packet error rate was $11^{-3}$, the packet delay was 48 ms and the throughput was again 0.9 Mbit/s, and the resulting calculation of value of the link is:

$$M = 100 / (((11^{-3} - 10^{-3})/10^{-3})^2 + ((48 - 50)/50)^2 + ((0.9 - 1)/1)^2)$$

$$M = 100 / ((0.06 + 0.0016 + 0.01))$$

$$M = 100 / 0.0716$$

$$M = 1397$$

**[0060]** It is worth noting that a poor score is achieved in the first example because the link in question is significantly better than required by the QoS requirements. The use of such a link may therefore be considered to be 'wasteful' and hence produced a poor score.

**[0061]** Figure 6B shows a variant importance calculation in which this kind of 'wastefulness' is disregarded. In particular, rather than squaring each of the relative differences in order to calculate a positive value for each, the algorithm calculates an amount by which the measurement falls short, which may be 0. Taking the first of the above examples:

$$M = 100 / ((max((10^{-4} - 10^{-3})/10^{-3}), 0)) + max((30 - 50)/50, 0) + max((1 - 0.9)/1, 0)))$$

$$M = 100 / ((max(-0.9, 0) + max(-0.4, 0) + max(0.1, 0))$$

$$M = 100 / (0 + 0 + 0.1)$$

$$M = 1000$$

**[0062]** Thus, a significantly improved score is achieved even though perhaps use of this link is wasteful.

**[0063]** A still further consideration is how the present technique can be adapted to deal with multiple routes. One way of doing this is to calculate the routes iteratively. For instance, having determined a route from $Src_1$ to $X_1$, the process can begin again for finding a route from $Src_2$ to $X_1$. In this case, of course, the network characteristics may have changed as a consequence of the path from $Src_1$ to $X_1$ being used and so the sounding/beaconing/measuring process may need to begin again in order to produce updated network characteristics. In addition, a new future rewards table 400 may be required.

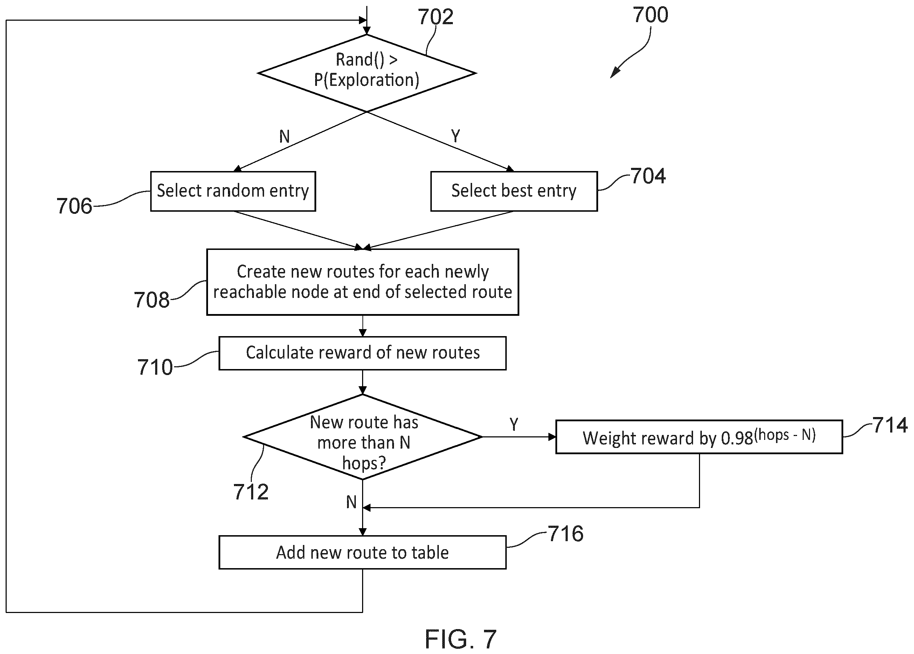

**[0064]** Figure 7 illustrates a flowchart 700 that shows a method of performing reinforcement learning. The process begins at a step 702 at which a random number is generated and this is compared to P(Exploration) - the probability with which exploration is performed at each iteration. For instance, P(Exploration) might be 0.9. If exploration is to be performed then at step 704, the best entry in the table 400 is selected. Otherwise, at step 706 a random entry is selected. In either event, at step 708, new routes are created for each of the newly reachable nodes at the end of the selected route (if any). At step 710, for each such route, a reward is calculated. This might dynamically query the costs of links with nodes in the network or could use cached data from a table 410 of data that has previously been collected.

**[0065]** In any event, the flowchart 700 then includes the optional steps 712, 714 of weighting. Here, weighting is performed on longer routes to discourage their use for exploration or exploitation. In particular, if a route is longer than N hops, then the route's reward is multiplied by 0.98 for each hop over N. That is, as the route gets longer and longer, its estimated reward decreases to allow for errors in the route calculation, the uncertainty of variances in the value of the links and so on. In addition, it is likely that better solutions will be achieved using shorter paths. Thus, longer paths are slightly discouraged. Other weighting techniques are of course possible.

**[0066]** The resulting new routes and their values are then added to the table 400, and become available for later selection. The process then returns to step 702.

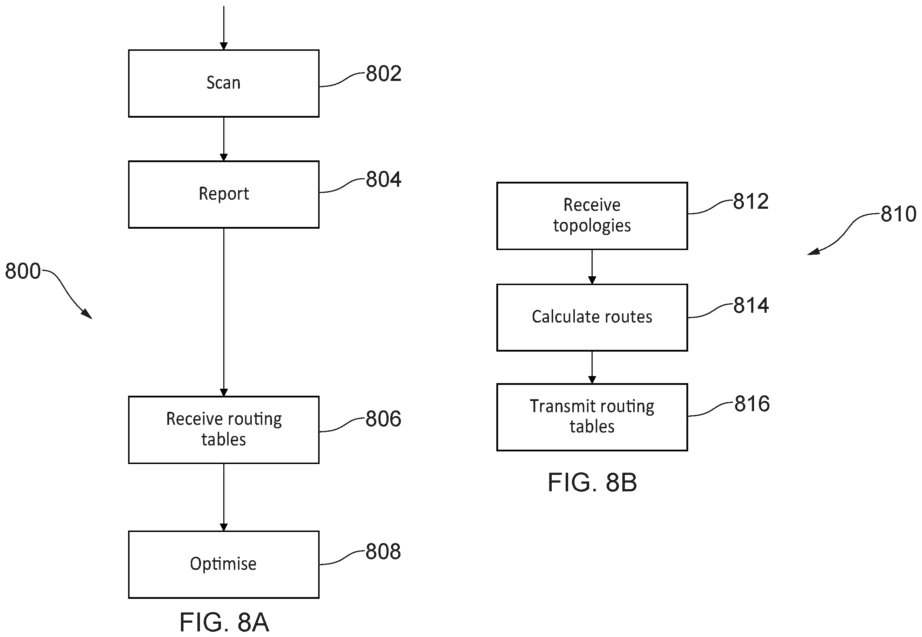

**[0067]** Figure 8 shows a flowchart 800 that shows a method of processing for a node 4, and a flowchart 810 that shows a method of processing for a control node 6. The flowchart 800 begins with a first scanning step 802 in which the part of the network local to the node 4 is discovered. This can be achieved by nodes transmitting beacons (potentially on request). The receiving of a beacon at a node 4 indicates that the node 4 can be transmitted to by the transmitter. If this is done on demand then this is also suggestive that the transmitter can be transmitted to. Optionally at this stage, further measurements may be made. For instance, the bandwidth, latency, and error rate might be calculated. The resulting data is then reported at step 804 to a control node 6. At step 806, routing tables are received at the node 4 from the control node 6. The routing tables indicate how data should be routed to arrive at a particular destination. For instance, to reach a node X, the node 4 may have to transmit via an intermediate node C, which is local to the node 4. Finally at step 808, optimisation of the links to the neighbouring nodes listed in the routing table is performed. For instance, taking the above example, beamforming may take place in order to more accurately or quickly transmit data to the intermediate node C.

**[0068]** At the control node 6 side, the topologies that were reported at step 804 are received at step 812. This data can be stored in a wireless parameters table 410 for instance. Routes are then calculated at step 814 (e.g. using reinforcement

learning as previously discussed). The resulting routes are then transmitted at step 816 where they are received at step 806 as previously discussed.

These flowcharts 800, 810 only represent one possible way of working. It is possible for the discovered network topologies to be provided on demand during the calculation of routes at step 814. Similarly, the optimisation step may not always be performed, or may be performed pre-emptively (e.g. during the scanning process perform network calculations are made so that route determinations can be made using a 'best case scenario'). The steps shown here are therefore not necessarily fixed.

In response to a route becoming unavailable, a message may be transmitted to the control node 6 (the control node 6 may also need to be periodically 'pinged' in order to avoid a recalculation occurring). At this point, network topologies may be regathered, or assumptions made as to the disrupted node (e.g. using route tracing techniques). As previously discussed, an alternative route can then be recalculated and transmitted out to the network.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative embodiments of the invention have been described in detail herein with reference to the accompanying drawings, it is to be understood that the invention is not limited to those precise embodiments, and that various changes, additions and modifications can be effected therein by one skilled in the art without departing from the scope and spirit of the invention as defined by the appended claims. For example, various combinations of the features of the dependent claims could be made with the features of the independent claims without departing from the scope of the present invention.

Some configurations of the present technique are described in the following clauses:

Clause 1. A control node comprising:

receive circuitry configured to receive topology data regarding a network comprising a plurality of nodes connected by links, wherein at least some of the links are wireless links of a first frequency range and at least some of the links are of a second frequency range; and
calculation circuitry configured to calculate at least one multi-node path from a given source node in the nodes to a given destination node in the nodes, wherein
the first frequency range and the second frequency range are non-overlapping.

Clause 2. The control node according to clause 1, wherein
the topology data comprises, for each node of the plurality of nodes, a set of wireless parameters for neighbours of that node, for each of the first frequency range and the second frequency range.

Clause 3. The control node according to any preceding clause, wherein

an end of the first frequency range is below 6 GHz; and
a start of the second frequency range is at least 6 GHz.

Clause 4. The control node according to any preceding clause, wherein
the calculation circuitry is configured to calculate the at least one multi-node path from the given source node to the given destination based on a cost function.

Clause 5. The control node according to any preceding clause, wherein
the calculation circuitry is configured to calculate the at least one multi-node path from the given source node to the given destination node using machine learning.

Clause 6. The control node according to any preceding clause, wherein
the calculation circuitry is configured to calculate the at least one multi-node path from the given source node to the given destination node based on a quality of service requirement for the source node.

Clause 7. The control node according to clause 6, wherein
the quality of service requirement comprises one or more factors including:

a throughput;

a packet delay; and
an error rate.

Clause 8. The control node according to clause 7, wherein
each of the one or more factors is weighted in importance to produce the at least one multi-node path.

Clause 9. The control node according to any preceding clause, wherein
the multi-node path can be any one of:

an entire frequency range 1 path,
an entire frequency range 2 path, and
a mixed frequency range path.

Clause 10. The control node according to any preceding clause, wherein
the calculation circuitry configured to calculate plurality of multi-node paths including the multi-node path from sources
including the given source to destinations including the given destination.

Clause 11. The control node according to clause 10, wherein
the sources have a plurality of quality of service requirement.

Clause 12. The control node according to clause 11, wherein
the control node is configured to determine the plurality of multi-node paths aiming to maximise a number of the quality
of service requirements.

Clause 13. A method comprising:

receiving topology data regarding a network comprising a plurality of nodes connected by links, wherein at least
some of the links are wireless links of a first frequency range and at least some of the links are of a second
frequency range; and
calculating at least one multi-node path from a given source node in the nodes to a given destination node in the
nodes, wherein
the first frequency range and the second frequency range are non-overlapping.

Clause 14. A node comprising:

scan circuitry configured to determine topology data by attempting to communicate to each node in a set of
neighbouring nodes using a first frequency in a first frequency range and a second frequency in a second
frequency range;
transmission circuitry configured to transmit the topology data to a control node;
receive circuitry configured to receive a routing table to route data to a given destination node from the control
node;
communication circuitry configured to route incoming data according to the routing table; and
optimisation circuitry configured to optimise communication within the set of neighbouring nodes.

Clause 15. The node according to clause 14, wherein
the routing table is configured to indicate, for the given destination node, a next hop from among the neighbouring
nodes.

Clause 16. The node according to any one of clauses 14-15, wherein

the routing table is configured to provide a plurality of routes for data to a plurality of destination nodes including
the given destination node, from the node; and
the routing table indicates, for each of the plurality of destination nodes, a next hop from among the neighbouring
nodes.

Clause 17. The node according to any one of clauses 14-16, wherein
the optimisation circuitry is configured to optimise links those of the neighbouring nodes that are identified as being
next hops according to the routing table.

Clause 18. The node according to any one of clauses 14-17, wherein
the topology data comprises wireless parameters including one or more of the following:

a bandwidth,
a latency, and
an error rate.

Clause 19. A method comprising:

determining topology data by attempting to communicate to each node in a set of neighbouring nodes using a first frequency in a first frequency range and a second frequency in a second frequency range;
transmission circuitry configured to transmit the topology data to a control node;
receiving a routing table to route data to a given destination node from the control node;
routing incoming data according to the routing table; and
optimising communication within the set of neighbouring nodes.

**Claims**

1. A control node comprising:

receive circuitry configured to receive topology data regarding a network comprising a plurality of nodes connected by links, wherein at least some of the links are wireless links of a first frequency range and at least some of the links are of a second frequency range; and
calculation circuitry configured to calculate at least one multi-node path from a given source node in the nodes to a given destination node in the nodes, wherein
the first frequency range and the second frequency range are non-overlapping.

2. The control node according to claim 1, wherein
the topology data comprises, for each node of the plurality of nodes, a set of wireless parameters for neighbours of that node, for each of the first frequency range and the second frequency range.

3. The control node according to any preceding claim, wherein

an end of the first frequency range is below 6 GHz; and
a start of the second frequency range is at least 6 GHz.

4. The control node according to any preceding claim, wherein
the calculation circuitry is configured to calculate the at least one multi-node path from the given source node to the given destination based on a cost function or machine learning.

5. The control node according to any preceding claim, wherein

the calculation circuitry is configured to calculate the at least one multi-node path from the given source node to the given destination node based on a quality of service requirement for the source node; and
the quality of service requirement comprises one or more factors including:

a throughput;
a packet delay; and
an error rate.

6. The control node according to claim 5, wherein

each of the one or more factors is weighted in importance to produce the at least one multi-node path; and
the multi-node path can be any one of:

an entire frequency range 1 path,
an entire frequency range 2 path, and

a mixed frequency range path.

7. The control node according to any preceding claim, wherein
the calculation circuitry configured to calculate plurality of multi-node paths including the multi-node path from sources including the given source to destinations including the given destination.

8. The control node according to claim 7, wherein

the sources have a plurality of quality of service requirement; and
the control node is configured to determine the plurality of multi-node paths aiming to maximise a number of the quality of service requirements.

9. A method comprising:

receiving topology data regarding a network comprising a plurality of nodes connected by links, wherein at least some of the links are wireless links of a first frequency range and at least some of the links are of a second frequency range; and
calculating at least one multi-node path from a given source node in the nodes to a given destination node in the nodes, wherein
the first frequency range and the second frequency range are non-overlapping.

10. A node comprising:

scan circuitry configured to determine topology data by attempting to communicate to each node in a set of neighbouring nodes using a first frequency in a first frequency range and a second frequency in a second frequency range;
transmission circuitry configured to transmit the topology data to a control node;
receive circuitry configured to receive a routing table to route data to a given destination node from the control node;
communication circuitry configured to route incoming data according to the routing table; and
optimisation circuitry configured to optimise communication within the set of neighbouring nodes.

11. The node according to claim 10, wherein
the routing table is configured to indicate, for the given destination node, a next hop from among the neighbouring nodes.

12. The node according to any one of claims 10-11, wherein

the routing table is configured to provide a plurality of routes for data to a plurality of destination nodes including the given destination node, from the node; and
the routing table indicates, for each of the plurality of destination nodes, a next hop from among the neighbouring nodes.

13. The node according to any one of claims 10-12, wherein
the optimisation circuitry is configured to optimise links those of the neighbouring nodes that are identified as being next hops according to the routing table.

14. The node according to any one of claims 10-13, wherein
the topology data comprises wireless parameters including one or more of the following:

a bandwidth,
a latency, and
an error rate.

15. A method comprising:

determining topology data by attempting to communicate to each node in a set of neighbouring nodes using a first frequency in a first frequency range and a second frequency in a second frequency range;

transmission circuitry configured to transmit the topology data to a control node;
receiving a routing table to route data to a given destination node from the control node;
routing incoming data according to the routing table; and
optimising communication within the set of neighbouring nodes.

FIG. 1

Scan circuitry 8

Transmission circuitry 10

Communication circuitry 12

Receive circuitry 14

Optimisation circuitry 16

Topology data

Routing tables

Receive circuitry 18

Calculation circuitry 20

Transmit circuitry 20

2

4

6

EP 4 683 390 A1

15

FIG. 2

FIG. 3A

sub-6 GHz link

mmWave link

| Dest | Next Hop | FR |
|------|----------|-----|
| $X_1$ | A | FR1 |
| $X_2$ | A | FR1 |

Legend:
- ——→ Sub-6 GHz link
- - - -→ mmWave link
- ━━→ Selected sub-6GHz link
- ━ ━→ Selected mmWave link

FIG. 3B

FIG. 3C

| Dest | Next Hop | FR |
|------|----------|-----|
| $X_1$ | A | FR1 |
| $X_2$ | A | FR1 |

Sub-6 GHz link

mmWave link

Selected sub-6GHz link

Selected mmWave link

410

| Link | Throughput (MBps) | Latency (ms) |
|---|---|---|
| $A_2$->B | 7.3 | 11 |
| B->C | 0.2 | 13 |
| C->D | 0.8 | 16 |
| C->B | 1.1 | 22 |
| C->D | 4.4 | 26 |
| D->E | 3.9 | 22 |
| E->F | 2.1 | 19 |
| F->G | 2.7 | 44 |
| G->H | 3.5 | 37 |
| H->G | 0.2 | 90 |

400

| Active | Route | Estimated reward |
|---|---|---|
| 0 | $A_2$->B | 9 |
| 0 | $A_1$->B | 1.1 |
| 0 | B->C->D | 2.4 |
| 0 | B->C | 2.2 |
| 0 | $A_2$->C | 7 |
| 0 | $A_2$->B->C | 4.1 |
| 1 | $A_2$->B->C->D | 4.4 |
| 1 | $A_2$->B->C->E | 3.9 |
| 1 | $A_2$->B->C->D->F->G->H | 2.1 |

FIG. 4

| 5QI | Resource Type | Priority Level | Packet Delay Budget | Packet Error Loss Rate | Example Throughput | Example Services |
|---|---|---|---|---|---|---|
| 1 | GBR | 2 | 100 ms | $10^{-2}$ | 20 kbps | Conversational Voice |
| 2 | | 4 | 150 ms | $10^{-3}$ | 1 Mbps | Conversational Video (Live Streaming) |
| 3 | | 3 | 50 ms | $10^{-3}$ | 1 Mbps | Real Time Gaming, V2X messages, Electricity distribution - medium voltage, Process automation - monitoring |
| 4 | | 5 | 300 ms | $10^{-6}$ | 10 Mbps | Non-Conversational Video (Buffered Streaming) |
| 65 | | 0.7 | 75 ms | $10^{-2}$ | 32 kbps | Mission Critical user plane Push To Talk voice (e.g., MCPTT) |
| 66 | | 2 | 100 ms | $10^{-2}$ | 1 Mbps | Non-Mission-Critical user plane Push To Talk voice |
| 67 | | 1.5 | 100 ms | $10^{-3}$ | 500 kbps | Mission Critical Video user plane |
| 75 | | 2.5 | 50 ms | $10^{-2}$ | 32 kbps | V2X messages |
| 71 | | 5.6 | 150ms | $10^{-6}$ | 500 kbps | "Live" Uplink Streaming |
| 72 | | 5.6 | 300ms | $10^{-4}$ | 500 kbps | "Live" Uplink Streaming |
| 73 | | 5.6 | 300ms | $10^{-8}$ | 500 kbps | "Live" Uplink Streaming |
| 74 | | 5.6 | 500ms | $10^{-8}$ | 500 kbps | "Live" Uplink Streaming |
| 76 | | 5.6 | 500ms | $10^{-4}$ | 500 kbps | "Live" Uplink Streaming |
| 5 | Non-GBR | 1 | 100 ms | $10^{-6}$ | 5 kbps | IMS Signalling |
| 6 | | 6 | 300 ms | $10^{-6}$ | 15 Mbps | Video (Buffered Streaming), TCP-based apps |
| 7 | | 7 | 100 ms | $10^{-3}$ | 1.5 Mbps | Voice, Video (Live Streaming), Interactive Gaming |
| 8 | | 8 | 300 ms | $10^{-6}$ | 2 Mbps | Video (Buffered Streaming), TCP-based apps |
| 9 | | 9 | | | | sharing, progressive video |
| 10 | | 9 | 1100 ms | $10^{-6}$ | 10 Mbps | Video (Buffered Streaming), TCP-based apps and any service that can be used over satellite access with these characteristics |
| 69 | | 0.5 | 60 ms | $10^{-6}$ | 100 Mbps | Mission Critical delay sensitive signalling |
| 70 | | 5.5 | 200 ms | $10^{-6}$ | 100 Mbps | Mission Critical Data |
| 79 | | 6.5 | 50 ms | $10^{-2}$ | 500 kbps | V2X messages |
| 80 | | 6.8 | 10 ms | $10^{-6}$ | 15 Mbps | Low latency eMBB, Augmented Reality |
| 82 | Delay Critical GBR | 1.9 | 10 ms | $10^{-4}$ | 1.5 Mbps | Discrete Automation |
| 83 | | 2.2 | 10 ms | $10^{-4}$ | 1.5 Mbps | |
| 84 | | 2.4 | 30 ms | $10^{-5}$ | 1.5 Mbps | Intelligent Transport Systems |
| 85 | | 2.1 | 5 ms | $10^{-5}$ | 32 kbps | Electricity Distribution- high voltage |

FIG. 5

$$M = N / (x((d - d')/d')^2 + y((e - e')/e')^2 + z((f - f')/f)^2)$$

## FIG. 6A

$$M = N / (x(\max((d - d')/d', 0)) + y(\max((e - e')/e', 0) + z(\max((f' - f)/f, 0)))$$

## FIG. 6B

M = Importance value
N = Perfect score (e.g. 100)
x = Weighting of error rate (e.g. 1.)
d = Observed error rate
d' = Required error rate from QoS
y = Weighting of latency (e.g. 1)
e = Observed latency
e' = Required packet delay budget from QoS
z = Weighting of throughput (e.g. 1)
f = Observed throughput
f' = Required throughput

EP 4 683 390 A1

700

702

Rand() >
P(Exploration)

N
Y

706 — Select random entry

Select best entry — 704

708 — Create new routes for each newly
reachable node at end of selected route

710 — Calculate reward of new routes

New route has
more than N
hops?

712

Y

Weight reward by $0.98^{(hops - N)}$ — 714

N

Add new route to table — 716

FIG. 7

EP 4 683 390 A1

```
         ┌─────────────────┐
         │      Scan       │───802
         └─────────────────┘
                 │
                 ▼
         ┌─────────────────┐
         │     Report      │───804
         └─────────────────┘
                 │
    800          │
                 │
                 ▼
         ┌─────────────────┐
         │ Receive routing │───806
         │     tables      │
         └─────────────────┘
                 │
                 ▼
         ┌─────────────────┐
         │    Optimise     │───808
         └─────────────────┘
```

FIG. 8A

```
         ┌─────────────────┐
         │     Receive     │───812
         │    topologies   │
         └─────────────────┘                810
                 │
                 ▼
         ┌─────────────────┐
         │ Calculate routes│───814
         └─────────────────┘
                 │
                 ▼
         ┌─────────────────┐
         │ Transmit routing│───816
         │     tables      │
         └─────────────────┘
```

FIG. 8B

Europäisches
Patentamt

European
Patent Office

Office européen
des brevets

# EUROPEAN SEARCH REPORT

**Application Number**

EP 25 17 9498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/381619 A1 (AXNÄS JOHAN [SE] ET AL) 29 December 2016 (2016-12-29) * paragraph [0005] - paragraph [0006] * * paragraph [0018] - paragraph [0019] * * paragraph [0023] - paragraph [0025] * * paragraph [0027] - paragraph [0030] * * paragraph [0034] - paragraph [0037] * * paragraph [0041] - paragraph [0048] * * paragraph [0051] * * paragraph [0053] * * paragraph [0058] - paragraph [0059] * ----- | 1-15 | INV. H04W40/06 H04W40/12 H04W40/22 H04W40/24 |
| X | US 2010/074194 A1 (LIU HANG [US] ET AL) 25 March 2010 (2010-03-25) * paragraph [0008] - paragraph [0010] * * paragraph [0034] - paragraph [0043] * ----- | 1-15 | |
| A | US 2020/196219 A1 (HASHEMI MORTEZA [US]) 18 June 2020 (2020-06-18) * paragraph [0120] - paragraph [0122] * * paragraph [0127] - paragraph [0134] * * paragraph [0136] - paragraph [0141] * ----- | 1-15 | **TECHNICAL FIELDS SEARCHED (IPC)** H04W |

The present search report has been drawn up for all claims

| Place of search | Date of completion of the search | Examiner |
|---|---|---|
| The Hague | 9 October 2025 | Jurca, Dan |

EPO FORM 1503 03.82 (P04C01)

## ANNEX TO THE EUROPEAN SEARCH REPORT
## ON EUROPEAN PATENT APPLICATION NO.

EP 25 17 9498

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | Publication date | Patent family member(s) | | Publication date |
|---|---|---|---|---|
| US 2016381619 A1 | 29-12-2016 | EP | 3097725 A1 | 30-11-2016 |
| | | US | 2016381619 A1 | 29-12-2016 |
| | | WO | 2015108460 A1 | 23-07-2015 |
| US 2010074194 A1 | 25-03-2010 | BR | PI0721229 A2 | 01-01-2013 |
| | | CN | 101647238 A | 10-02-2010 |
| | | EP | 2115961 A1 | 11-11-2009 |
| | | JP | 5021769 B2 | 12-09-2012 |
| | | JP | 2010518745 A | 27-05-2010 |
| | | KR | 20100014385 A | 10-02-2010 |
| | | RU | 2009133344 A | 20-03-2011 |
| | | TW | 200847695 A | 01-12-2008 |
| | | US | 2010074194 A1 | 25-03-2010 |
| | | WO | 2008097221 A1 | 14-08-2008 |
| US 2020196219 A1 | 18-06-2020 | CN | 113170373 A | 23-07-2021 |
| | | EP | 3881604 A1 | 22-09-2021 |
| | | JP | 7345735 B2 | 19-09-2023 |
| | | JP | 2022514910 A | 16-02-2022 |
| | | KR | 20210084621 A | 07-07-2021 |
| | | US | 2020196219 A1 | 18-06-2020 |
| | | WO | 2020128649 A1 | 25-06-2020 |

EPO FORM P0459

For more details about this annex : see Official Journal of the European Patent Office, No. 12/82